# EUROPEAN PATENT SPECIFICATION

(11) **EP 2 330 925 B1**
(45) Date of publication and mention of the grant of the patent: **23.10.2013**
(21) Application number: 09815663.1
(22) Date of filing: 10.09.2009
(51) Int. Cl.: A23L 1/29, A23L 1/30

(54) **ACIDIFIED NUTRITIONAL FORMULA**
ANGESÄUERTE NÄHRSTOFFKOMBINATION
FORMULE NUTRITIVE ACIDIFIÉE

(30) Priority: 24.09.2008 EP 08165032
(43) Date of publication of application: 15.06.2011
(73) Proprietor: Nestec S.A., 1800 Vevey (CH)
(72) Inventor: KREB, Nico, CH-3626 Hünibach (CH); BREEUWER, Pieter, CH-1023 Crissier (CH)
(74) Representative: Corticchiato, Olivier
(86) International application number: PCT/EP2009/061771
(87) International publication number: WO 2010/034624

(56) References cited:
- WO-A-2004/054371
- WO-A-2004/112508
- WO-A-2006/108824
- G.A. BURDOCK: "Encyclopedia of Food and Colour Additives" 1997, CRC PRESS , BOCA RATON , XP002512859 the whole document
- SHELEF L A: "ANTIMICROBIAL EFFECTS OF LACTATES: A REVIEW" JOURNAL OF FOOD PROTECTION, DES MOINES, IO, US, vol. 57, no. 5, 1 May 1994 (1994-05-01), pages 445-450, XP002943200 ISSN: 0362-028X
- P.KARLSON, D.DOENECKE,J.KOOLMANN, G.FUCH, W.GEROK: "Karlsons Biochemine und Pathobiochemie" 2005, THIEME VERLAG , STUTTGART , XP002512860 the whole document
- H.-D.BELITZ, W.GROSCH: "Food Chemistry" 1999, SPRINGER VERLAG , BERLIN , XP002512861 the whole document
- FOOD & BEVERAGE ASIA, 2003, pages 19-21, XP002512858

## Description

The present invention relates to an acidified nutritional formula with improved taste and to a process of manufacturing such a nutritional formula.

### The Background Art

Mother's milk is recommended for all infants. However, in some cases breast feeding is inadequate or unsuccessful or inadvisable for medical reasons or the mother chooses not to breast feed. Infant formulas have been developed for these situations.

Generally infant formulas are available in powder form, concentrated liquid form, or ready to feed liquid form. Powdered infant formulas are the most popular form; primarily due to their cost and nutritional quality. The key disadvantage with powdered infant formulas is the inconvenience of preparation. The powdered formula must be spooned into a sterilised drinking vessel, water which has been boiled and allowed to cool is then poured into the drinking vessel to reconstitute the formula, the drinking vessel is then sealed and shaken to ensure the powder has been dissolved. To avoid any bacterial growth, the formula should then be consumed immediately after reconstitution.

If prepared and consumed in this manner, powdered infant formulas provide a safe and nutritionally good substitute for mother's milk in the situations described above. However, primarily due to the inconvenient preparation, many parents or caregivers do not prepare the formulas properly and hence expose the infant to risks of infection or other risks. For example, the water may not be boiled prior to use in which case, any pathogens in the water are fed to the infant. Usually water sources in developed countries are safe but this may not be the case everywhere. Alternatively, batches of the infant formula may be prepared and then stored until needed. Unfortunately, if any pathogen has contaminated the formula, it then has time to replicate.

Typical bacterial pathogens that can cause infant diarrhoea include *Escherichia coli*, *Salmonella* and *Shigella*, for example. However, viruses (rotaviruses, caliciviruses) and protozoic parasites, such as *Cryptosporidium* are also frequently associated with infant diarrhoea. Formula feeding may increase the risk of such gastrointestinal infections if the proper instructions for reconstitution are not scrupulously observed.

One way of approaching the problem is the addition of a specific anti-microbial agents, as is taught in WO 96/25054. However, for infants the consumption of anti-microbial agents on a regular basis should be avoided because of potential damage to the liver and, in addition, because anti-microbial agents often exhibit undesirable side effects.

A nutritionally safe and effective way of inhibiting growth of bacteria in a reconstituted infant formula is acidification. Various powdered infant formulas that have a relatively low pH when made up are marketed, for example under the trademarks Pelargon®, Bionan® and Bioguigoz®. However, the process by which acidification is achieved is time and cost intensive: the basic ingredients of an infant formula are fermented with lactic acid bacteria until a specific pH is achieved, the fermentation is interrupted, the liquid is pasteurised and processed to a powder. The fermentation has to be controlled carefully, because it may in itself provide growth possibilities for pathogenic bacteria and also for bacteriophages which can interfere with the fermentation process. Further, the pH of such formulas cannot be adjusted very accurately or reliably standardised to a specific value.

More recently and as described in WO2004/054371 a process has been developed for the acidification of nutritional compositions such as infant formulas by the direct addition of L(+) lactic acid with the intention of producing a composition which, when reconstituted ready for consumption, has a pH in the range from 3.5 to 6, preferably 3.5 to 5.5, more preferably in the range from 4.0 to 5.3, even more preferably in the range of 4.5 to 5.0, such as 4.6 to 4.8 for example. However, the taste of such products is not completely satisfactory.

### Summary of the Invention

Surprisingly, a way has now been found to increase the pH of directly acidified nutritional formulas thereby improving the taste and yet preserve the required degree of bacteriostatic activity.

Consequently, the present invention provides a nutritional formula having a pH in the liquid state in the range from 4.8 to 5.2, which formula comprises, on a dry matter basis, lactic acid in an amount of from 1.00 to 1.20%and from 0.90 to 1.40% of calcium lactate.

It is known that weak organic acids such as lactic acid can inhibit bacterial and fungal growth. Such acids exist in solution in a pH-dependent equilibrium between the un-dissociated and dissociated state. A reduction in pH shifts the equilibrium to the uncharged, un-dissociated state of the acid, thus optimal inhibitory activity is achieved at low pH because the un-dissociated acid is freely permeable across the plasma membrane and able to enter the bacterial cells. Upon encountering the higher pH inside the cell, the molecule then dissociates, releasing charged anions and protons. The cells use metabolic energy to cope with the pH decrease, thus inhibiting growth. Without wishing to be bound by theory, the present inventors believe that by supplementing the lactate concentration at a given pH, the concentration of un-dissociated lactic acid and therefore the bacteriostatic effect increase. The improved bacteriostatic effect (compared to an unsupplemented solution at the same pH) is believed to be due to the higher concentration of un-dissociated acid in solution. In this way, a bacteriostatic effect equivalent to that of an unsupplemented solution at lower pH can be achieved with a consequent improvement in the taste of the composition. In this connection, it should be borne in mind that, as pH is expressed on a logarithmic scale, quite small changes in pH of the order of 0.1 or 0.2 have a significant impact on taste.

The assessment of taste is a complex matter that requires much testing : For example in infants, when at all possible, such testing require a careful observation of the subjects. The inventor have found that both the acidity (pH) and buffering potential of the composition may impact the perceived taste. Without being bound by the theory it is believed that the particular composition of the invention delivers in that respect an optimal balance between pH and the buffering potential. Moreover it appear critical for the present invention to both deliver an adequate level of bacteriostatic activity and to preserve a taste that is acceptable to the target group of consumers, especially for infants. The present invention presents a fine optimal balance between these two considerations. In one embodiment the balance is further complexified by the need to preserve the bio-activity and survival of the probiotic that may be present in the composition.

### Brief Description of the Drawings

Figure 1 compares the growth of *E sakazakii* in various infant formulas at 30°C over a period of 6 hours;
Figure 2 compares the growth of *S typhimurium* in various infant formulas at 30°C over a period of 6 hours;
Figure 3 compares the growth of *S aureus* in various infant formulas at 30°C over a period of 6 hours;
Figure 4 compares the growth of *B cereus* in various infant formulas at 30°C over a period of 6 hours;
Figure 5 compares the growth of *P aeruginosa* in various infant formulas at 30°C over a period of 6 hours;
Figure 6 compares the growth of *E coli* in various infant formulas at 37°C over a period of 6 hours;
Figure 7 compares the growth of *P aeruginosa* in various infant formulas at 37°C over a period of 6 hours.

### Detailed Description of the Invention

In this specification, the following terms have the following meanings:-
"in the liquid state" means a nutritional formula which is ready to consume whether made and stored as a liquid or reconstituted with water or other liquid if made and stored as a powder. It is understood that a powder composition of the invention will see its pH measured once reconstituted to a liquid composition. Hence the pH measurements and values refers to a liquid composition (either native or reconstituted). The reconstitution is to be made according to usual instructions for the consumption of the composition. In absence of instructions, the reconstitution is operated with water, in a proportion that is adequate to achieve the desired caloric density.
"L(+)-lactic acid" means S(+)-2-hydroxy propionic acid.

All percentages are percentages by weight, unless otherwise indicated.

Suitable salts of lactic acid include sodium lactate, potassium lactate and calcium lactate but calcium lactate is particularly preferred.

The nutritional formula comprises from 1.00 to 1.20% lactic acid. The nutritional formula comprises from 0.90 to 1.40% of calcium lactate.

The total lactate content (i.e. including lactate ions deriving from both the lactic acid and the lactic acid salt)of the nutritional formula is preferably at least 70% L(+)-lactate.

The nutritional formula may be an infant formula. The term "nutritional formula" and nutritional composition are herewith used interchangeably with the same meaning.

An infant formula according to the present invention may comprise a protein source in an amount from 1.8 g to 3.5 g protein/100 kcal of composition. In one embodiment the nutritional composition of the invention comprises a protein source in an amount of not more than 2.0 g protein /100kcal of composition, preferably 1.8 to 2.0 g protein /100kcal. The type of protein is not believed to be critical to the present invention provided that the minimum requirements for essential amino acid content are met and satisfactory growth is ensured although it is preferred that over 50% by weight of the protein source is whey. Thus, protein sources based on whey, casein and mixtures thereof may be used as well as protein sources based on soy. As far as whey proteins are concerned, the protein source may be based on acid whey or sweet whey or mixtures thereof and may include alpha-lactalbumin and beta-lactoglobulin in whatever proportions are desired.

The proteins may be intact or hydrolysed or a mixture of intact and hydrolysed proteins. It may be desirable to supply partially hydrolysed proteins (degree of hydrolysis between 2 and 20%), for example for infants believed to be at risk of developing cows' milk allergy. If hydrolysed proteins are required, the hydrolysis process may be carried out as desired and as is known in the art. For example, a whey protein hydrolysate may be prepared by enzymatically hydrolysing the whey fraction in one or more steps. If the whey fraction used as the starting material is substantially lactose free, it is found that the protein suffers much less lysine blockage during the hydrolysis process. This enables the extent of lysine blockage to be reduced from about 15% by weight of total lysine to less than about 10% by weight of lysine; for example about 7% by weight of lysine which greatly improves the nutritional quality of the protein source.

The infant formula may contain a carbohydrate source. Any carbohydrate source conventionally found in infant formulae such as lactose, saccharose, maltodextrin, starch and mixtures thereof may be used although the preferred source of carbohydrates is lactose. Preferably the carbohydrate sources contribute between 35 and 65% of the total energy of the formula.

The infant formula may contain a source of lipids. The lipid source may be any lipid or fat which is suitable for use in infant formulas. Preferred fat sources include palm olein, high oleic sunflower oil and high oleic safflower oil. The essential fatty acids linoleic and α-linolenic acid may also be added as may small amounts of oils containing high quantities of preformed arachidonic acid and docosahexaenoic acid such as fish oils or microbial oils. In total, the fat content is preferably such as to contribute between 30 to 55% of the total energy of the formula. The fat source preferably has a ratio of n-6 to n-3 fatty acids of about 5:1 to about 15:1; for example about 8:1 to about 10:1.

The infant formula is acidified using lactic acid. If it is intended to feed the formula to infants under the age of three months, the lactic acid will preferably be in the form of the L(+) enantiomer as it is not recommended to feed the D(-) enantiomer or mixtures containing this to young infants.

The lactic acid may be added to the infant formula with the other ingredients either batch-wise or in-line although in-line addition is preferred. The lactic acid can be added in a dry form (dry mixing) together with other dry ingredients being mixed, or in a liquid form to either a dry or liquid mix of ingredients. In one embodiment the lactic acid is added both during the dry phase and during the wet phase. In one embodiment the lactic acid may be dry-mixed with a powdered infant formula although in this case it is necessary to use lactic acid of acceptable microbiological purity as the mixture will not undergo any further heat treatment. The calcium lactate is preferably also added by dry mixing. Suitable lactic acid and calcium lactate for dry mixing are available commercially, for example from PURAC biochem, Arkelsedijk 46, PO Box 21, 4200 AA Gorinchem, The Netherlands.

The infant formula may also contain all vitamins and minerals understood to be essential in the daily diet and in nutritionally significant amounts. Minimum requirements have been established for certain vitamins and minerals. Examples of minerals, vitamins and other nutrients optionally present in the infant formula include vitamin A, vitamin B1, vitamin B2, vitamin B6, vitamin B12, vitamin E, vitamin K, vitamin C, vitamin D, folic acid, inositol, niacin, biotin, pantothenic acid, choline, calcium, phosphorous, iodine, iron, magnesium, copper, zinc, manganese, chloride, potassium, sodium, selenium, chromium, molybdenum, taurine, and L-carnitine. Minerals are usually added in salt form. The presence and amounts of specific minerals and other vitamins will vary depending on the intended infant population.

If necessary, the infant formula may contain emulsifiers and stabilisers such as soy lecithin, citric acid esters of mono- and di-glycerides, and the like.

The infant formula may optionally contain other substances which may have a beneficial effect such as lactoferrin, nucleotides, nucleosides, and the like.

A nutritional formula according to the present invention may be prepared by blending together the protein, the carbohydrate source, and the fat source in appropriate proportions. If used, the emulsifiers may be included at this point. The vitamins and minerals may be added at this point but are usually added later to avoid thermal degradation. Any lipophilic vitamins, emulsifiers and the like may be dissolved into the fat source prior to blending. Water, preferably water which has been subjected to reverse osmosis, may then be mixed in to form a liquid mixture. The temperature of the water is conveniently about 50°C to about 80°C to aid dispersal of the ingredients. Commercially available liquefiers may be used to form the liquid mixture. The liquid mixture may then be homogenised.

The homogenised liquid mixture may be thermally treated to reduce bacterial loads, by rapidly heating the liquid mixture to a temperature in the range of about 80°C to about 150°C for about 5 seconds to about 5 minutes, for example. This may be carried out by steam injection, autoclave or by heat exchanger; for example a plate heat exchanger.

Then, the liquid mixture may be cooled to about 60°C to about 85°C; for example by flash cooling. The L(+) lactic acid diluted to 35-65%, preferably 40-60%, by weight of L(+) lactic acid in water may be added in-line to the heat-treated solution at ambient temperature. pH may be controlled by in-line measurement, for example, allowing for adjusting pH during the in-line adding by way of a feedback mechanism.

The solids content of the mixture may conveniently be adjusted at this point followed by further heat treatment and homogenisation steps using similar conditions as before.

The mixture is then transferred to a suitable drying apparatus such as a spray drier or freeze drier and converted to powder. The powder should have a moisture content of less than about 5% by weight. Calcium lactate may be added to the powder by dry mixing.

In one embodiment the nutritional formula of the invention comprises a probiotic or a mix of different probiotics. The probiotic is preferentially selected to resist to the target pH of the composition, most preferably the probiotic is able to survive the target pH of the formula for a period of at least 1 hour, at least 2 hours, at least 3 hours , at least 5 hours, at least 12 hours , at least 24 hours, or at least 5 days. By "revive" it is meant that the survival rate of the probiotics defined as the time to see a 50% decrease in the probiotic population. A probiotic may be defined as a live microbial feed supplement which beneficially affects the host animal by improving its intestinal microbial balance. The probiotic used in the present composition may be selected form the group comprising of Bifidobacterium, Lactobacillus, Streptococcus, Enterococcus and Saccharomyces or mixtures thereof, preferably selected from the group consisting of *Bifidobacterium longum, Bifidobacterium lactis*, *Lactobacillus acidophilus*, *Lactobacillus rhamnosus*, *Lactobacillus paracasei*, *Lactobacillus johnsonii, Lactobacillus plantarum*, *Lactobacillus salivarius, Lactobacillus reuteri, Enterococcus faecium, Streptococcus sp.* and *Saccharomyces boulardii* or mixtures thereof. More preferably the probiotic is selected from the group comprising of *Lactobacillus rhamnosus* CGMCC 1.3724 (nick name NCC4007 and LPR), *Bifidobacterium lactis* CNCM I-3446 sold *inter alia* by the Christian Hansen company of Denmark under the trade mark Bb12 (nick mane NCC2818), *Bifidobacterium longum* ATCC BAA-999 sold by Morinaga Milk Industry Co. Ltd. of Japan under the trade mark BB536, *Lactobacillus paracasei* CNCM I-2116 (nick name NCC2461 and ST11), *Lactobacillus johnsonii* CNCM I-1225 (nick name NCC533 and Lal), *Lactobacillus fermentum* VRI 003 sold by Probiomics (Australia), under the trademark PCC, *Bifidobacterium longum* CNCM I-2170, *Bifidobacterium longum* CNCM I-2618, *Bifidobacterium breve* sold by Danisco (Denmark) under the trade mark Bb-03, *Bifidobacterium breve* sold by Morinaga (Japan) under the trade mark M-16V and the strain of *Bifidobacterium breve* sold by Institut Rosell (Lallemand) (Canada) under the trade mark R0070, *Lactobacillus paracasei* CNCM I-1292, *Lactobacillus rhamnosus* ATCC 53103 obtainable *inter alia* from Valio Oy of Finland under the trade mark LGG, *Enterococcus faecium* SF 68, and mixtures thereof. A preferred probiotic is *Lactobacillus rhamnosus* CGMCC 1.3724. Another preferred probiotics is *Lactobacillus reuteri, especially Lactobacillus reuteri* ATCC 55730, ATCC PTA 6475, ATCC PTA 4659 and ATCC PTA 5289, and more particularly *Lactobacillus reuteri* ATCC 55730 *and* L. reuteri DSM 17938 obtainable from Biogaia AB (Kungsbroplan 3A Stockholm, Sweden). It is foreseen that the composition of the present nutritional formula may comprise more than one probiotic, preferably targeting different health effects, and most preferably synergistically reinforcing each other health effect(s). It has been found that some selected probiotics can both survive the target pH of the composition and deliver their health effect to the subject. In one embodiment the probiotics are treated such as to better resist the target pH of the composition. Such treatment can include coating of the probiotics.

Preferably, the probiotic is present in the composition in an amount equivalent to between 10³ and 10¹⁰ cfu/g of dry composition (cfu = colony forming unit). This expression includes the possibilities that the bacteria are live, inactivated or dead or even present as fragments such as DNA or cell wall materials. In other words, the quantity of bacteria which the formula contains is expressed in terms of the colony forming ability of that quantity of bacteria as if all the bacteria were live irrespective of whether they are, in fact, live, inactivated or dead, fragmented or a mixture of any or all of these states. Preferably the probiotic is present in an amount equivalent to between 10⁴ to 10⁹ cfu/g of composition, even more preferably in an amount equivalent to between 10⁶ and 10⁸ cfu/ g of composition. In one embodiment the amount of probiotics present in the nutritional composition of the invention is low dose. By low dose is meant 10² to 10⁵ cfu/g of composition, preferably 10² to 10⁴ cfu/g of composition.It is anticipated that low dose of probiotics can, especially for very young infants, have a similar benefit as high dose of probiotics.

### Example 1:

An acidified infant formula is prepared using the ingredients given in Table 1 below.

**Table 1**

| **Ingredient** | **Amount (wt%)** |
|---|---|
| Dried whey powder | 18.88 |
| Maltodextrin (DE 24-32) | 17.5 |
| Lactose | 16.56 |
| Palm oil | 13.0 |
| Skimmed milk powder | 16.04 |
| Low erucic rapeseed oil () | 4.7 |
| Coconut oil | 4.4 |
| Sunflower oil | 2.7 |
| Lactic acid¹ | 1.1 |
| Calcium lactate | 1.8 |
| Soy lecithin (at 62%) | 0.6 |
| Water | 2.1 |

Vitamins and minerals were added according to recommended values.

The lactose, maltodextrin, whey and skimmed milk powders were mixed with water at 50-60°C. The solution was standardised to a total solids content (TS) of 25%. Minerals were added to the solution which was then cooled to 8°C.

The solution was then pre-heated to 50°C in a double-jacket oil tank, and the palm oil, coconut oil, low erucic rapeseed oil, sunflower oil and soy lecithin. were added in-line. The solution was heated to 105°C, held at that temperature for 5 seconds and then passed to an evaporator where it was concentrated up to 40-50% total solids. The concentrated solution was passed to a buffer tank. L(+)-lactic acid was diluted in water to a concentration of about 10% at 4°C and the diluted acid was slowly added to the concentrated solution. The acidified concentrated solution was pre-heated to 75°C and homogenised.

The homogenised solution was spray-dried and the resulting powder was dry-mixed with the vitamins, the remaining minerals, the calcium lactate and a small part of the maltodextrin.

The resulting powdered infant formula may be reconstituted with water to prepare a ready to feed infant formula. The pH of the reconstituted formula was 5.0.

In an alternative example, the composition of example 1 is complemented with a probiotic (*Lactobacillus reuteri DSM 1793, sourced from Biogaia, Sweden) in an amount of* 2.10⁷ cfu/g of dry composition. The addition is made by dry-mixing.

### Example 2: Microbiological Tests

The infant formulas shown in Table 2 below were subjected to microbiological challenge tests with the micro-organisms *Salmonella typhimurium* NCTC 12023, *Escherichia coli* NCTC 9001, *Pseudomonas aeruginosa* NCTC 10662, *Staphylococcus aureus* NCTC 651, *Bacillus cereus* NCTC 7464 and *Enterobacter sakazakii* FSM 263. The challenge organisms were supplied by The Health Protection Agency, Water EQA, Newcastle Laboratory, Institute of Pathology, General Hospital, Westgate Road, Newcastle upon Tyne, NE4 6BE.

The growth and dilution media used were Bacto Brain heart Infusion (BHI - BD237500), Maximum Recovery Diluent (MRD, Oxoid CM733), violet red bile glucose agar, brilliant green agar, *Bacillus cereus* selective agar, *Pseudomonas* agar base and Staph express disc.

The samples of formula were inoculated and analysed as follows. All formulas were prepared by reconstituting 139g of powdered formula in 900ml of sterile deionised water heated to 40°C. From each reconstituted sample, 2 x 200ml were aseptically dispensed into sterile Duran bottles. One bottle of each pair was inoculated with one the challenge strains to achieve a concentration of 10² cfu/ml

The various inoculated formulas were analysed by preparing 1 ml pour-plates with the appropriate growth medium. The plates were incubated at 37°C or 30°C for 24 hours, then the inoculated formula samples were added and the plates were incubated at 37°C or 30°C for up to a further 6 hours. Enumeration analyses were carried out after 2, 4 and 6 hours of incubation. The pH of the leftover (uninoculated formula) was measured.

**Table 2**

| **Product** | **Lactic acid (%w/w)** | **Calcium lactate (%w/w)** | **pH** |
|---|---|---|---|
| A | 1.4 | 0.0 | 4.6 |
| B | 1.2 | 1.0 | 4.8 |
| C | 1.1 | 0.9 | 4.9 |
| D | 1.0 | 2.0 | 5.1 |
| E | 1.2 | 1.0 | 4.9 |
| F | 1.1 | 1.0 | 5.0 |
| G | 1.0 | 1.0 | 5.0 |
| H | 1.2 | 1.4 | 4.8 |
| I | 1.1 | 1.4 | 4.9 |
| J | 1.0 | 1.4 | 5.0 |
| K* | 1.3 | 0.0 | 4.8 |
| L** | 0.0 | 0.0 | 7.0 |

| | | | |
|---|---|---|---|
| * commercially available acidified infant formula sold under the trade mark NAN PELARGON ® ** commercially available non-acidified infant formula sold under the trade mark LACTOGEN 1 ® | | | |

Products A, D, K and L are comparative compositions, whereas all other products are according to the invention.

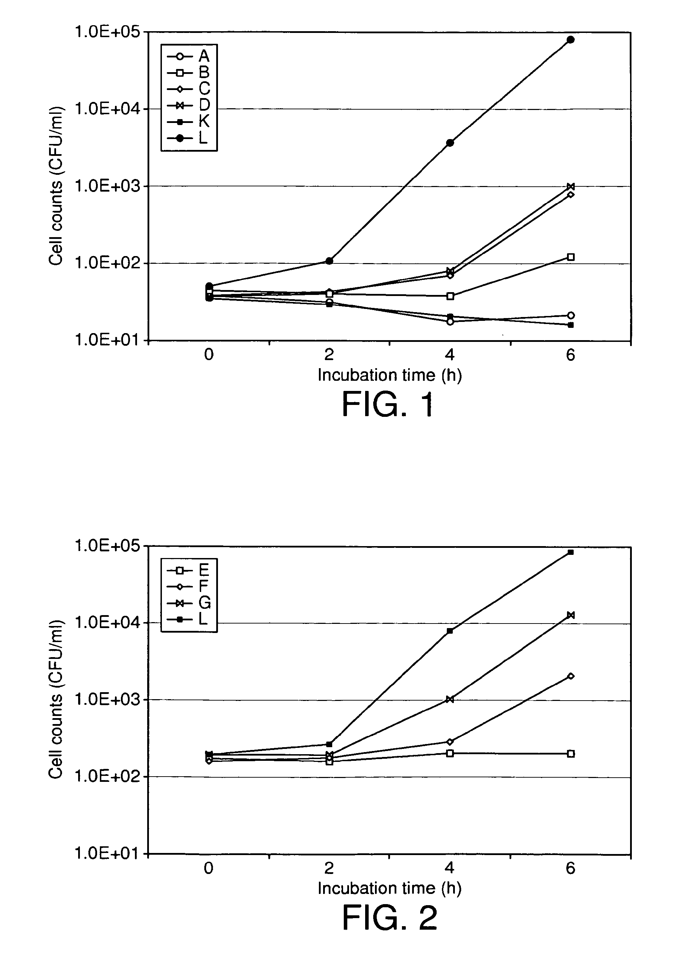

As may be seen from Figure 1, in formulas B and C according to the invention, growth of *E sakazakii* at 30°C was restricted to comparable levels to that found in a acidified formula containing lactic acid only and having a pH of 4.6 and to an acidified formula having a pH of 4.7 for a period of 4 hours.

Figure 2 shows the effect of four formulas on growth of *S typhimurium* at 30°C. It may be seen that formulas E, F and G according to the invention respectively restricted growth of the pathogen to acceptable levels for a period of 4 hours.

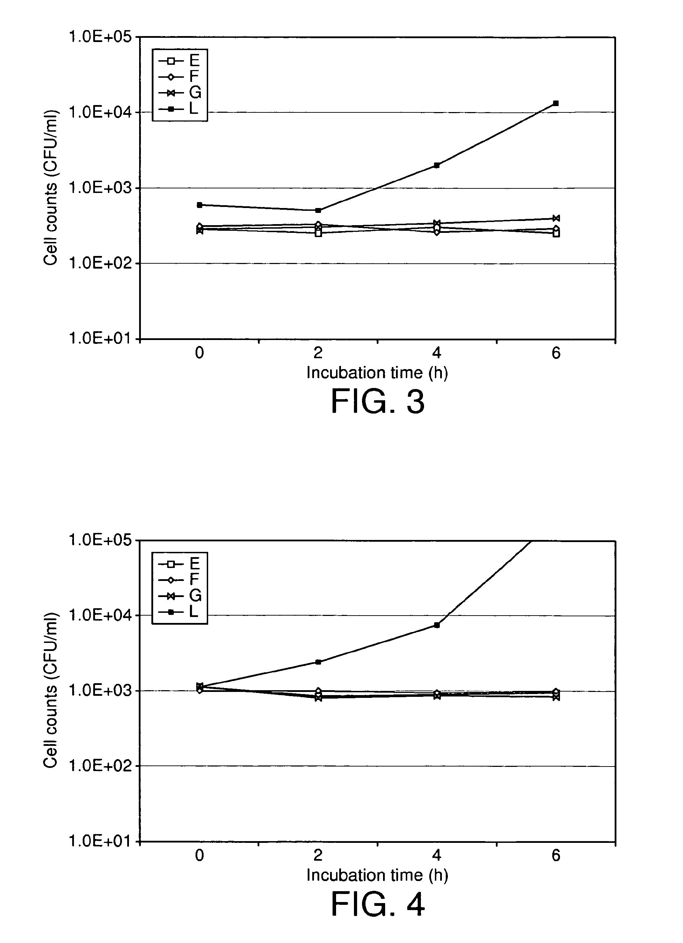

Figure 3 shows the effect of four formulas on growth of *S aureus* at 30°C. It may be seen that formulas E, F and G according to the invention respectively restricted growth of the pathogen to acceptable levels for a period of 4 hours.

Figure 4 shows the effect of four formulas on growth of *B cereus* at 30°C. It may be seen that formulas E; F and G according to the invention respectively restricted growth of the pathogen to acceptable levels for a period of 4 hours.

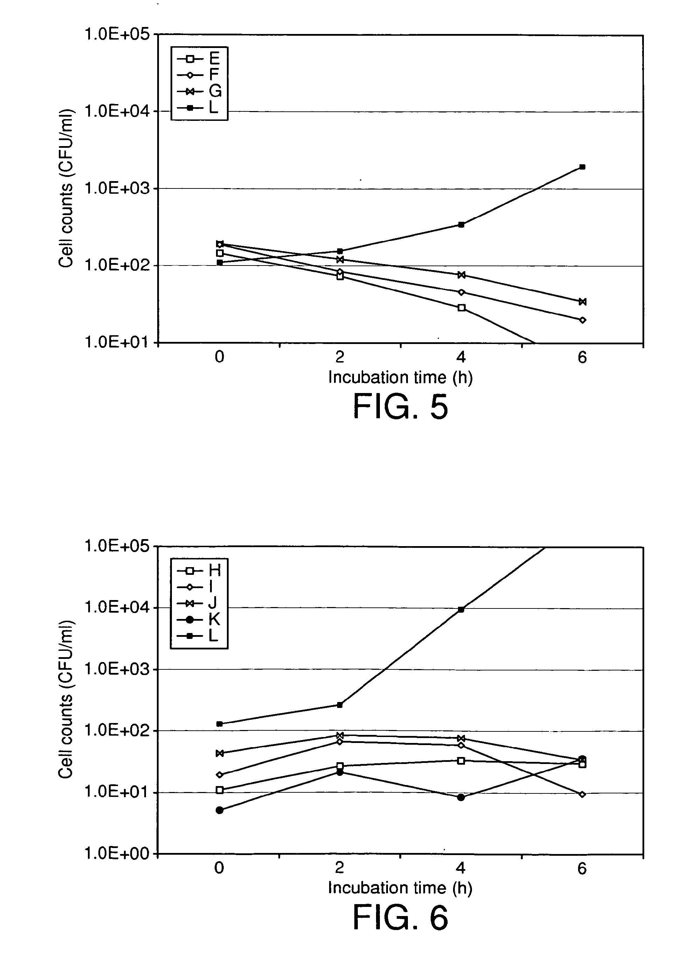

Figure 5 shows the effect of four formulas on growth of *P aeruginosa* at 30°C. It may be seen that formulas E, F and G according to the invention respectively restricted growth of the pathogen to acceptable levels for a period of 6 hours.

As may be seen from Figure 6, in formulas H, I and J according to the invention, growth of *E coli* at 37°C was for a period of 4 hours restricted to comparable levels to those found in an acidified formula containing lactic acid only and having a pH of 4.8.

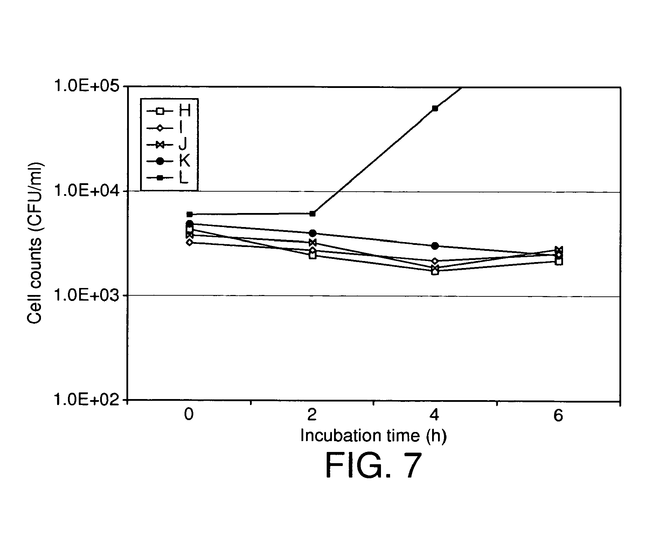

As may be seen from Figure 7, in formulas H, I and J according to the invention, growth of *P aeruginosa* at 37°C was for a period of 4 hours restricted to comparable levels to those found in an acidified formula containing lactic acid only and having a pH of 4.8.

### Example 3:- Taste Modulation

Two formulas according to the present invention, an experimental formula prepared for comparative purposes and a commercially available acidified infant formula sold under the trade mark NAN PELARGON ® were subjected to comparative sensory evaluation by a panel of 13 trained testers. The formulas were evaluated at 42°C under controlled conditions for overall flavour and acidity. The details of the formulas tested are shown in Table 3 below.

**Table 3**

| **Product** | **Lactic acid (%w/w)** | **Calcium lactate (%w/w)** | **pH** |
|---|---|---|---|
| NAN PELARGON | 1.3 | 0.0 | 4.8 |
| Experimental 1 | 1.2 | 1.0 | 4.8 |
| Experimental 2 | 1.0 | 1.0 | 5.0 |
| Comparative | 1.4 | 0.0 | 4.6 |

All the formulas were prepared as follows. 1 litre of demineralised water was warmed to 42°C in a 1 litre Duran bottle in a water bath. 139g of infant formula powder was weighed in a 400ml glass beaker. 900g of the warmed demineralised water was poured into a 200ml glass beaker. The powder was poured into the water and whisked until completely dispersed. The dispersion was poured back into the Duran bottle and kept at 42°C in the water bath.

The relative acidity of the four infant formulas was determined by the testers on a scale from 1 (least acidic) to 4 (most acidic) using 1g lactic acid (50% w/w solution) in 1 litre Evian ® water as a reference. A Friedman test was then applied to the sums of the rankings per product at a global risk of 5%. The panel perceived differences in acidity between the four formulas (p>0.0001). The infant formula with the lowest pH (comparative formula) was perceived to be the most acid. The next most acid formula was perceived to be NAN PELARGON, then experimental formula 1, then experimental formula 2.

## Claims

1. A nutritional formula having a pH in the liquid state in the range from 4.8 to 5.2, which formula comprises, on a dry matter basis, lactic acid in an amount of from 1.00 to 1.20% and from 0.90 to 1.40% of calcium lactate.

2. A nutritional formula according to claim 1, wherein at least 70% of the total lactate ion content is L(+)-lactate.

3. A nutritional formula according to claim 2 which is an infant formula.

4. The nutritional formula of any of the preceding claims wherein said nutritional formula comprises from 1.8g to 3.5g protein per 100 kcal of composition.

5. The nutritional formula of any of the preceding claims wherein said formula further comprises a probiotic.

## Patentansprüche

1. Nahrungsrezeptur mit einem pH-Wert im flüssigen Zustand im Bereich von 4,8 bis 5,2, wobei die Rezeptur in der Trockenmasse Milchsäure in einer Menge von 1,00 bis 1,20% und von 0,90 bis 1,40% Kalziumlaktat aufweist.

2. Nahrungsrezeptur nach Anspruch 1, wobei mindestens 70% des Gesamt-Laktat-Ionengehaltes L(+)-Laktat ist.

3. Nahrungsrezeptur nach Anspruch 2, die eine Säuglingsnahrung ist.

4. Nahrungsrezeptur nach einem der vorhergehenden Ansprüche, wobei die Nahrungsrezeptur von 1,8 g bis 3,5 g Protein pro 100 kcal der Zusammensetzung aufweist.

5. Nahrungsrezeptur nach einem der vorhergehenden Ansprüche, wobei die Rezeptur außerdem ein Probiotikum aufweist.

## Revendications

1. Une composition nutritionnelle ayant un pH à l'état liquide dans la plage allant de 4.8 à 5.2, composition qui comprend, sur une base de matière sèche, de l'acide lactique en quantité allant de 1.00 à 1.20% et de 0.90 à 1.40% de lactate de calcium.

2. Une composition nutritionnelle selon la revendication 1, dans laquelle au moins 70% du contenu total en ion lactate est L(+)-lactate.

3. Une composition nutritionnelle selon la revendication 2 qui est une composition pour nourrisson.

4. La composition nutritionnelle de l'une des revendications précédentes, dans laquelle ladite composition nutritionnelle comprend de 1.8g à 3.5g de protéine pour 100 kcal de composition.

5. La composition nutritionnelle de l'une des revendications précédentes, dans laquelle ladite composition comprend en outre un probiotique.
